# EUROPEAN PATENT APPLICATION

(11) **EP 2 879 127 A1**
(43) Date of publication of application: **03.06.2015**
(21) Application number: 14386012.0
(22) Date of filing: 22.05.2014
(51) Int. Cl.: G10H 1/34, G10H 1/00

(54) **Musical instrument in the shape of an electronic harmonium - synthesizer, for learning and performing Byzantine music and Western music**

(30) Priority: 22.05.2013 GR 2013100303
(71) Applicant: Dimitriadis, Panagiotis Dimitrios, 54631 Thessaloniki (GR)
(72) Inventor: Dimitriadis, Panagiotis Dimitrios, 54631 Thessaloniki (GR)

(57) **Abstract**

Musical instrument in the shape of an electronic harmonium or synthesizer, for learning and performing Byzantine music and european - western music, where the notes of the Byzantine music (phthongs) and of the European-Western music coexist and are produced by the activation of the corresponding 79 keys or activation means covering 2 octaves of the Byzantine music scale. A band switch enables shifting the whole keys by a further 2 octaves.

14 keys, corresponding to the 7 tones of the natural heptatonic diatonic scale, are arranged horizontally; the alteration keys for the intermediate note-cells of each tone are arranged verticall above their respective tone keys, totalising 72 keys. In addition two notes from the next octave and the respective intermediate note-cells are added for convenience of play, totalising 79 keys.
The western music tones not falling within +/- 0,6% on the tones of the natural diatonic scale (B and E) are made to correspond to a correspondiong alteration key of the Byzantine music scale.
This arrangement enables to perform musical pieces of Byzantine Music and of European-Western Music as well, at the same time, without any adjustments.

Additional features:
A second 16 key set on two rows replicates the two octaves of 7 tones of the heptatonic scale, plus keys for the the flat alteration of the respective middle tones ("Zo flat").

Pitch shift by +/- 1 to 5 semitones of the band of the byzantine music; volume control; metronome; mixing, volume control of the rhythmic beats of the metronome, performance rhythm of the musical pieces, time signature (type of tempo from 0,25s to 1,25s). Powered by main or by batteries.The complex sounds are reproduced through two loudspeakers, or through an external connection.

## Description

The invention has to do with a musical instrument in the shape of an electronic harmonium - synthesizer, for learning and performing Byzantine Music and European-Western Music. This invention as a whole is an originally designed computer - electronic harmonium - synthesizer. By means of the software existing in its originally designed electronic circuits, a user is capable of producing notes of the Byzantine Music (phthongs) and of the European-Western Music, in the shape of complex sounds, by the activation of the corresponding key or activation means with the ability to cover more than two octaves.

The BAND of the keys or activation means (FIGURE "A", indication 1) covers the notes of two octaves of the Natural Diatonic Scale of the Byzantine Music, where there coexist two corresponding octaves of the notes of the European Western scale, which correspond to specific notes and intermediate note-cells of the Byzantine Music.

The instrument refered above has the ability, by means of its electronic circuits and their software, to be connected with even more means, beside the group of the seventy nine (79) (FIGURE "A"-indication 1) and the sixteen (16) (FIGURE "A"-indication 2) activation means, in order to cover more than two octaves. Furthermore, it can be connected to external computers (PC, LAPTOP or NET BOOK) or to digital units as well, through an electronic port (USB) incorporated in the central circuit of sound control and sound production.

In this instrument's central circuit of sound control and sound production, there is a special electronic circuit, which, with the help of the central control unit and the software existing within the latter, it can "drive"(*) a display panel, such as Liquid Crystal Display, LCD, in order for the user to be able to see, through visual signals and symbols, the operating state of the instrument.
(*)The electronic term "drive" means here that the display panel is electrically connected to and fully controlled by (it displays) the central control unit and the software existing within the latter.

Nowadays, due to the development of electronics, of electronic hardware, such as integrated circuits, microcontrollers etc., and due to the creation of specialised software, I have designed and built the present electronic musical instrument, in the shape of a synthesizer, in order to ameliorate the accuracy of the audio performance of the Byzantine notes (with the coexistence of the European notes). The produced sounds are complex, that is the audio signal of each note heard, beside its own basic frequency, it is mixed with signals of other harmonic frequencies. This frequency synthesizing helps each note produced to be pleasantly heard! Besides, the audio performance of each such sound varies in loudness, "envelope". That is, from the activation of a note until its ceasing, the volume changes for a more natural audio performance.

The musical scales of this instrument are based on the mathematical analysis of the diatonic spaces (tones) between the notes of the Natural Diatonic Scale of the Byzantine Music [Ni, Pa, Vou, Ga, The, Ke, Zo], which I have done based on its theory. These musical scales, as well as the intermediate note-cells, which show the correlation of the notes of the Byzantine and the European Music, they are performed by the activation of the corresponding keys or means (FIGURE "A", indication 1) (FIGURE "A", indication 2). Therefore, the definition of the frequencies of the notes of this instrument's Byzantine Music scales and of the intermediate note-cells of the Natural Diatonic Scale, and their correlation with the European-Western Music, is made according to FIGURE E (TABLE A.1.- High Band), FIGURE G (TABLE A.2 - High Band), FIGURE H (TABLE B.1 - Low Band), FIGURE I (TABLE B.2 - Low Band).

All the above taken into account, this present invention performs, most accurately, all the diatonic spaces of the scales of the Byzantine Music and of the European-Western Music as well.

This present invention, in order to support the teaching process and the performance of musical pieces (or mathemata), includes the accompanying means of a metronome (FIGURE "A" - indication 8), which helps the proper performance of a musical piece (mathema) by setting the appropriate rhythm and time signature.

The need for an objective sound source, based on the theory of the Byzantine Music, free from subjective factors, giving the clear notes and the diatonic spaces of the various scales of the Byzantine Music, for studying, teaching and performing purposes, has always been evident among the traditional and experienced chanters, because they knew very well how hard it is to properly perceive, teach and perform all these various spaces - tones of the Byzantine music, which also vary among the various scales. In order to meet this need, several instruments have been used, mostly string instruments such as "kanonaki", for an approximate performance. However, no instrument designed and built, based on the theory of the Byzantine Music, was ever officially accepted for these purposes. As a result, each and every chanter-performer and music teacher handles the Byzantine Music according to how correctly or reliably he has been taught by another music teacher and how he has memorised it, through oral transmission, without being able to avoid the subjective human factor.

This present invention allows the coexistence of both the Byzantine Music and the European-Western Music, in order that anyone interested, or any student, in both music types in general, to be able to fully perceive them, to distinguish them, to understand them better, and eventually to be able to perform them in writing or vocally. This will have as a consequence, the same instrument to be used in order to perform Byzantine musical pieces (mathemata) and at the same time European-Western musical pieces, in real time, with no external adjustments at all. Furthermore, original musical compositions can be made by combining tones and scales of both the Byzantine and the European-Western Music.

Therefore, this present invention, together with the means of the metronome, is an objective "teacher" of the Byzantine Music and at the same time of the European-Western Music. That is because, according to my calculations, it has been proved that some Byzantine notes and intermediate note-cells have the same frequency with the European-Western notes, with a slight variance not more than ± 0,6%, if we set KE' = 440,000 Hz = a' = A4 (A440) and Ke = 220,000 Hz = A3 (La, a), as shown in FIGURE E (Table A.1.- High Band) and in FIGURE H (Table B.1.- Low Band) respectively.

Therefore, this present invention can be used in many ways, such as:
- to study the tones and the theory of the Byzantine Music, and of the European Music as well.
- to perform the musical pieces of the Byzantine Music (mathemata), and of the European Music as well, at the same time, without any procedures-adjustments, from the very moment this instrument is switched on.
- to compose complex musical pieces, including scales of the Byzantine and of the European Music,
- to accompany a choir,
- in an orchestra, with the coexistence of other musical instruments, to perform both Byzantine and European melodies separately or simultaneously.

The invention is described below with reference to the attached figures:
FIGURE "A" shows the front elevation view of the instrument, with the accompanying supporting means and their corresponding number indications.
FIGURE "B" shows the back side view of the instrument, with the accompanying supporting means and their corresponding number indications.

FIGURE "A" presents a group - BAND of seventy-nine (79) keys or activation means (FIGURE "A" - indication 1), which can activate seventy-nine (79) corresponding notes of the Byzantine Music and the corresponding notes of the European-Western Music, according to FIGURE E (TABLE A.1.- High Band) and FIGURE H (TABLE B.1.- Low Band) and sixteen (16) keys or activation means (FIGURE "A" - indication 2), which can activate notes of two diatonic scales of the Byzantine music. FIGURE C. a, b, c, d. THE ELECTRONIC CIRCUITS OF THE INSTRUMENT (keyboard - FIGURE "A" indication 1 and indication 2) shows the unit of the electronic circuit of the keyboard of the 79 (FIGURE "A" - indication 1) and of the 16 (FIGURE "A" - indication 2) keys-means, which is controlled by the central control unit IC1 (FIGURE C.a), which by means of the existing software scans continuously all the above 79 and 16 keys-means. The seventy-nine (79) keys-means, starting from 1, up to 79 (FIGURE "A", indication 1), correspond to the switches - activation means according to FIGURE C.b, FIGURE C.c, and FIGURE C.d, from S1 (SW-PB), up to S79 (SW-PB). The sixteen (16) keys-means, starting from 1 up to 16 (FIGURE "A", indication 2), correspond to switches - activation means according to FIGURE C.d, from S80 (SW-PB), up to S95 (SW-PB). When a key-means is activated - pressed, the central control unit (FIGURE C.a) detects it, encodes it and then it sends this code to the central sound control unit U1 and sound production unit FIGURE D.a, b, c, d, e, f, g, h (THE ELECTRONIC CIRCUITS OF THE INSTRUMENT - the central sound control and sound production unit).

According to FIGURE "A" - indication 1, FIGURE C.b, FIGURE C.c and FIGURE C.d, (from S1, SW-PB, up to S79, SW-PB), FIGURE E (TABLE A.1. - High Band) and FIGURE H (TABLE B.1.- Low Band) in general, each key-means of the 79, as far as the lower horizontal row is concerned, sixteen (16) numbers : 1, 7, 13 , 18, 22, 28 , 33, 37, 43 , 49, 54 , 58, 64 , 69, 73 , 79, correspond to a diatonic note of the two octaves of the Natural Diatonic Scale of the Byzantine Music and as far as the vertical lines are concerned (the other keys-means), they correspond to intermediate note-cells of two succesive diatonic notes of the above horizontal ones, whose distribution is in accordance with the sequence of the notes and with the number of the intermediate note-cells of each tone according to the Natural Diatonic Scale of the Byzantine music. All these keys-means together, seventy-nine (79) in total (FIGURE "A" - indication 1) cover a band of two octaves of the Natural Diatonic Scale, with every second diatonic intermediate note-cell and the corresponding to these Chromatic Scales, Enharmonic Genus, "Chroes", "Fthores", flat notes ("Ifeseis") and sharp notes ("Dieseis") and at the same time two corresponding octaves of the European-Western musical scale according to FIGURE E (TABLE A.1.- High Band) and FIGURE H (TABLE B.1.-Low Band).

According to FIGURE "A" - indication 2 and to FIGURE C.d (from S80, SW-PB, up to S95, SW-PB) each key-means of the 16 corresponds to a diatonic note of the two octaves of the Natural Diatonic Scale - BAND, corresponding to the sixteen keys (16) of the 79 keys-means in the horizontal row referred above (Figure "A", indication 1, numbers: 1, 7, 13, 18, 22 , 28, 33, 37, 43, 49, 54, 58, 64, 69, 73, 79), including the flat "↓ Zo" (Zo ifesy) of the Ypati (High part of the scale) and the flat "↓ Zo" (Zo ifesy) of the Niti (Low part of the scale). The keyboard can serve as an "isokratis" (create a constant tone), during the performance of a musical piece (mathema) of Byzantine Music.

As shown in FIGURE "A"- indication 3, BAND, FIGURE D.b (JP6, GEN BAND SWIT.) and FIGURE D.d (JP11, BAND LEDS), the invention:
A. It is capable of:
   With the proper activation (toggle) of the switch - means "BAND" (FIGURE "A"-indication 3), [FIGURE D.b (JP6, GEN BAND SWIT.)] and the activation of the visual indication of the operation "low" (FIGURE "A" - indication 3), [FIGURE D.d (JP11, BAND LEDS)] according to the wishes of the user:
      1. regarding the 79 keys-means of the instrument (FIGURE "A"- indication 1) activating the low BAND of the notes [FIGURE H (TABLE B.1.- Low Band), FIGURE I (TABLE B.2.- Low Band)], that is the two low octaves of the Natural Diatonic Scale with the corresponding notes of the European-Western Scale.
      2. regarding the 16 keys-means (FIGURE "A" - indication 2) activating once more the Low BAND of the corresponding notes [FIGURE H (TABLE B.1.- Low Band), FIGURE I (TABLE B.2.- Low Band)].
B. It is capable of:
   With the proper activation (toggle) of switch-means "BAND" (FIGURE "A"- indication 3), [FIGURE D.b (JP6, GEN BAND SWIT.)] and the activation of the visual indication of operation "high" (FIGURE "A" - indication 3) [FIGURE D.d (JP11, BAND LEDS)] according to the wishes of the user:
      1. regarding the 79 keys-means of the instrument (FIGURE "A" - indication 1) activating the high BAND of the notes [FIGURE E (TABLE A.1.- High Band), FIGURE G (TABLE A.2.- High Band)], that is the two high octaves of the Natural Diatonic Scale with the corresponding notes of the European-Western Scale.
      2. regarding the 16 keys-means (FIGURE "A" - indication 2) activating once more the High BAND of the corresponding notes [FIGURE E (TABLE A.1.- High Band), FIGURE G (TABLE B.2.- High Band)].
C. For both BANDS, "low" and "high" (FIGURE "A"- indication 3) regarding the 79 keys-means of the instrument (FIGURE "A"- indication 1), the distribution and the
   group numbering of the vertical activation means - keys is the following:
      for numbers 2, 3, 4, 5, 6, it equals the half of the number of the intermediate note-cells between the tones **ga - the** (low) and **Ga' - The'** (high),
      for numbers 8, 9, 10, 11, 12, it equals the half of the number of the intermediate note-cells between the tones **the - ke** (low), and **The' - Ke'** (high),
      for numbers 14, 15, 16, 17, it equals the half of the number of the intermediate note-cells between the tones **ke -zo** (low), and **Ke' - Zo"** (high),
      for numbers 19, 20, 21, it equals the half of the number of the intermediate note-cells between the tones **zo - ni** (low), and **Zo" - Ni"** (high),
      for numbers 23, 24, 25, 26, 27, it equals the half of the number of the intermediate note-cells between the tones **ni - Pa** (low), and **Ni" - Pa"** (high),
      for numbers 29, 30, 31, 32, it equals the half of the number of the intermediate note-cells between the tones **Pa - Vou** (low), and **Pa" - Vou"** (high),
      for numbers 34, 35, 36, it equals the half of the number of the intermediate note-cells between the tones **Vou - Ga** (low), and **Vou" - Ga"** (high),
      for numbers 38, 39, 40, 41, 42, it equals the half of the number of the intermediate note-cells between the tones **Ga - The** (low), and **Ga" - The"** (high),
      for numbers 44, 45, 46, 47, 48, it equals the half of the number of the intermediate note-cells between the tones **The - Ke** (low), and **The" - Ke"** (high)
      for numbers 50, 51, 52, 53, it equals the half of the number of the intermediate note-cells between the tones **Ke - Zo'** (low), and **Ke" - Zo"'** (high)
      for numbers 55, 56, 57, it equals the half of the number of the intermediate note-cells between the tones **Zo' - Ni'** (low), and **Zo"' - Ni"'** (high)
      for numbers 59, 60, 61, 62, 63, it equals the half of the number of the intermediate note-cells between the tones **Ni' - Pa'** (low), and **Ni"' - Pa"'** (high)
      for numbers 65, 66, 67, 68, it equals the half of the number of the intermediate note-cells between the tones **Pa' - Vou'** (low), and **Pa"' - Vou"'** (high)
      for numbers 70, 71, 72, it equals the half of the number of the intermediate note-cells between the tones **Vou' - Ga'** (low), and **Vou"' - Ga"'** (high)
      for numbers 74, 75, 76, 77, 78, it equals the half of the number of the intermediate note-cells between the tones **Ga' - The'** (low), and **Ga"' - The"'** (high)
      for numbers 34, 35, 36, it equals the half of the number of the intermediate note-cells between the tones **Vou - Ga** (low), and **Vou" - Ga"** (high)
      for numbers 38, 39, 40, 41, 42, it equals the half of the number of the intermediate note-cells between the tones **Ga - The** (low), and **Ga" - The"** (high)
      for numbers 44, 45, 46, 47, 48, it equals the half of the number of the intermediate note-cells between the tones **The - Ke** (low), and **The" - Ke"** (high)
      for numbers 50, 51, 52, 53, it equals the half of the number of the intermediate note-cells between the tones **Ke - Zo'** (low), and **Ke" - Zo"'** (high)
      for numbers 55, 56, 57, it equals the half of the number of the intermediate note-cells between the tones **Zo' - Ni'** (low), and **Zo"' - Ni"'** (high)
      for numbers 59, 60, 61, 62, 63, it equals the half of the number of the intermediate note-cells between the tones **Ni' - Pa'** (low), and **Ni"' - Pa"'** (high)
      for numbers 65, 66, 67, 68, it equals the half of the number of the intermediate note-cells between the tones **Pa' - Vou'** (low), and **Pa"'- Vou"'** (high)
      for numbers 70, 71, 72, it equals the half of the number of the intermediate note-cells between the tones **Vou' - Ga'** (low), and **Vou"' - Ga"'** (high)
      for numbers 74, 75, 76, 77, 78, it equals the half of the number of the intermediate note-cells between the tones **Ga' - The'** (low), and **Ga"' - The"'** (high).

FIGURE "A"- indication 9 and FIGURE D.a (JP1, HEADER 2) show the "ON-OFF" switch, of the power supply of the instrument by network current of 230 V/50 Hz. In ON state, the instrument is brought into operation and in OFF state it is switched off. The power supply is basically done by a network of 230 V/50 Hz (FIGURE "B"-indication 14) [FIGURE D.a (JP1, HEADER 2)]. The instrument is capable of being powered by batteries that can be placed inside the instrument, beside the network power supply [FIGURE D.a (+12 V)]. FIGURE "A"- indication 10 and FIGURE D.a (JP1, CON2) show the characteristic or visual indication of the operation state of the instrument.

The volume control of the notes, activated by the seventy-nine (79) keys or activation means (FIGURE "A"- indication 1), is done by the control "VOLUME M" as shown in FIGURE "A" - indication 6 and FIGURE D.b (JP17, Vol). Furthermore, the volume control of the notes, activated by the sixteen (16) keys or activation means (FIGURE "A" - indication 2), is done by the control "VOLUME I" as shown in FIGURE "A"-indication 7 and FIGURE D.b (JP18, Isok. Vol).

The present invention includes an ELECTRONIC DISPLAY PANEL, as shown in FIGURE "A"- indication 15 and FIGURE D.f (JP16, LCD, Q3). The electronic circuit, according to FIGURE D.f (JP16, LCD, Q3), with the help of the central control unit [(FIGURE D.b) (FIGURE D.c) (FIGURE D.d) (FIGURE D.e) and (FIGURE D.f)] and a special software within it, can "drive" a display panel, such as Liquid Crystal Display, LCD.

There is also an electronic circuit [(FIGURE D.e (JP15, USB)], supported by the central control unit [(FIGURE D.b) (FIGURE D.c) (FIGURE D.d) (FIGURE D.e) and (FIGURE D.f)] and by a special software within it, which can communicate (FIGURE "B"- indication 16) with external computers (PC, LAPTOP or NET BOOK), or other digital units.

The complex sound of the notes is produced, based on the software, by special circuits [FIGURE D.g (THE ELECTRONIC CIRCUITS OF THE INSTRUMENT - circuits for the production of musical sounds, synthesizer)]. It goes through the mixer (FIGURE D.g), it enters for amplification into the amplifier circuit (FIGURE D.h) and is driven [FIGURE D.h (J3, PR OUT)] to one or two loudspeakers (FIGURE "B"-indication 11). There is, also, a jack (FIGURE "B"- indication 12) [FIGURE D.h (J2, OUTPUT)], from which the audio signals of notes can be electrically driven, instead of the loudspeakers (FIGURE "B"- indication 11), to a headset for internal recording, or to a larger amplifier with loudspeakers in order to cover larger areas and higher volume, etc.

There is the ability, if the user wishes, to shift the corresponding two octaves of the Scale, controlled by the 79 (FIGURE "A"- indication 1) and the 16 keys-means (FIGURE "A"- indication 2) by one semitone of the 12 note-cells to higher or lower notes, according to FIGURE G (TABLE A.2.- High Band), and FIGURE I (TABLE B.2.- Low Band), respectively, by the activation of the corresponding means (FIGURE "A"- indication 4) [FIGURE D.b (S1, S2)], activating the corresponding visual indication as well (FIGURE "A"- indication 5) [FIGURE D.c (JP8, UP-DOUN LEDS)].

When the musical instrument is switched on, automatically, a visual indicator (FIGURE "A"- indication 5) is set to "0", which means that in this position the notes of the scale of the Byzantine music coincide with the European notes, according to FIGURE E (TABLE A.1.- High Band) and FIGURE H (TABLE B.1.- Low Band), where the low BAND of notes is activated [FIGURE H (TABLE B.1.- Low Band)], with the visual indication turned to "low" (FIGURE "A" - indication 3). In this position, the note (phthong) Ke (Byzantine) is equal to A3 (La, European) = 220,000 Hertz (Hz).

The instrument includes a metronome, that is "METRONOME" (FIGURE "A"-indication 8), with its following control and adjustment means:
- The mixing switch, "MIXING" (FIGURE "A"- indication 8) (FIGURE D.g - JP12), depending on its position, it makes the rhythmic beats of the metronome sound together with the notes from the loudspeakers (FIGURE "B"- indication 11) [FIGURE D.h (J3, PR OUT)], or separately from another loudspeaker [FIGURE D.g (JP13, OUT_TONE)].
- The volume control of the signals - beats of the rhythm of the metronome, "VOLUME" (FIGURE "A"- indication 8) [FIGURE D.g (JP12, Q2, Q1)].
- The control which, by means of the software, controls the rhythm of the performance of a musical piece, "RHYTHM" (FIGURE "A"- indication 8) [FIGURE D.g (JP2, TONE SWITCH, a, b, c, d, TS ON OFF)]:
   1) Simple ("aplos", one knock) (Figure D.b, JP2, TONE SWITCHER, position a).
   2) Double ("disimos", two knocks) (Figure D.b, JP2, TONE SWITCHER, position b).
   3) Triple ("trisimos", three knocks) (Figure D.b, JP2, TONE SWITCHER, position c).
   4) Quadruple ("tetrasimos", four knocks) (Figure D.b, JP2, TONE SWITCHER, position d).
   5) In the OFF position, the rhythm is not heard [FIGURE D.b (JP2, TS ON OFF)].
- The control of the Time Signature, "TIME SIGNATURE" (FIGURE "A"- indication 8) [FIGURE D.B (JP3 AN. DELAY TONE)], is based on the software, and defines how fast or slow is the performance of a melody, in multiples or fractions of one second (second = 1 "), that is:
   VERY VERY SLOW: slower than 1" +1/5" (1 +1/5 sec).
   VERY SLOW Time Signature ("triargos"): 1" +1/5" (1 +1/5 sec) approximately.
   SLOW Time Signature ("diargos"): 1" (1 sec) approximately.
   MODERATE Time Signature (slow): 3/5" (3/5 sec) approximately.
   MEDIUM Time Signature ("argosyntomos"): 1/2" (1/2 sec) approximately.
   QUICK Time Signature ("gorgos"): 1/3" (1/3 sec) approximately.
   VERY QUICK Time Signature ("digorgos"): 1/4" (1/4 sec) approximately.
   VERY VERY QUICK: quicker than 1/4" (1/4 sec).

The eight original figures:
FIGURE D.a, FIGURE D.b, FIGURE D.c, FIGURE D.d, FIGURE D.e, FIGURE D.f, FIGURE D.g, FIGURE D.h, summarised in FIGURE D.a, b, c, d, e, f, g, h (THE ELECTRONIC CIRCUITS OF THE INSTRUMENT - central sound control and sound production unit), represent the electronic circuit of the central sound control and sound production unit, the electronic harmonium - synthesizer functions, the mixing, the amplification and the sound output wich include:
   □ The central power supply (FIGURE D.a) of all the electronic circuits.
   □ The central control unit U1 (FIGURE D.b, FIGURE D.c, FIGURE D.d, FIGURE D.e, FIGURE D.f), which, by means of the existing software, controls and adjusts the controling means:
      shift "BAND" (FIGURE "A"- indication 3) (FIGURE "A"- indication 4) "VOLUME M" (FIGURE "A"- indication 6) "VOLUME I" (FIGURE "A"- indication 7), "METRONOME" (FIGURE "A"- indication 8),
      shift display means "high"-"low" (FIGURE "A"- indication 3) (FIGURE "A"- indication 5), "ELECTRONIC DISPLAY PANEL" (FIGURE "A"- indication 15) and output means: digital output (FIGURE "A"- indication 16).
   □ The supporting circuits of the instrument:
      "ON - OFF" switch (FIGURE "A"- indication 9), operation indication (FIGURE "A"-indication 10), loudspeakers (FIGURE "A"- indication 11), sound output (FIGURE "A"- indication 12), fuse (FIGURE "A"- indication 13), power supply (FIGURE "A"-indication 14).
   □ The operating system of the synthesizer [FIGURE D.g (THE ELECTRONIC CIRCUITS OF THE INSTRUMENT - circuits for the production of complex sounds, synthesizer)].

The four original designs :
FIGURE C.a, FIGURE C.b, FIGURE C.c, FIGURE C.d" summarized in FIGURE C.a, b, c, d. THE ELECTRONIC CIRCUITS OF THE INSTRUMENT - keyboard (FIGURE "A"- indication 1 and indication 2), represent the electronic circuit of the central control unit IC1, which, by means of the existing software, controls and adjusts the keys or activation means (FIGURE "A"- indication 1 and FIGURE "A"- indication 2) and transfers the signal of the activation of any of these, if activated, to the central sound control and sound production unit (FIGURE D.a, b, c, d, e, f, g, h).

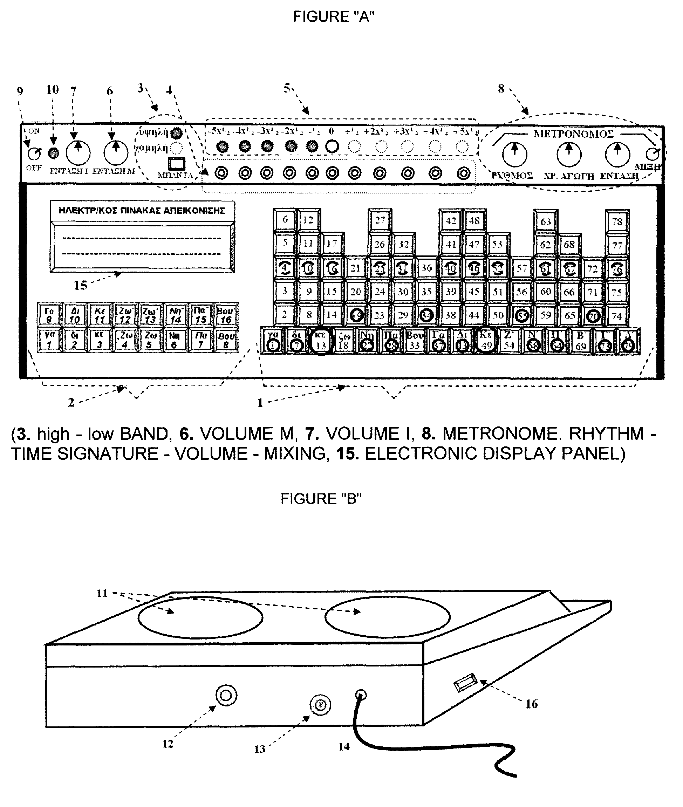

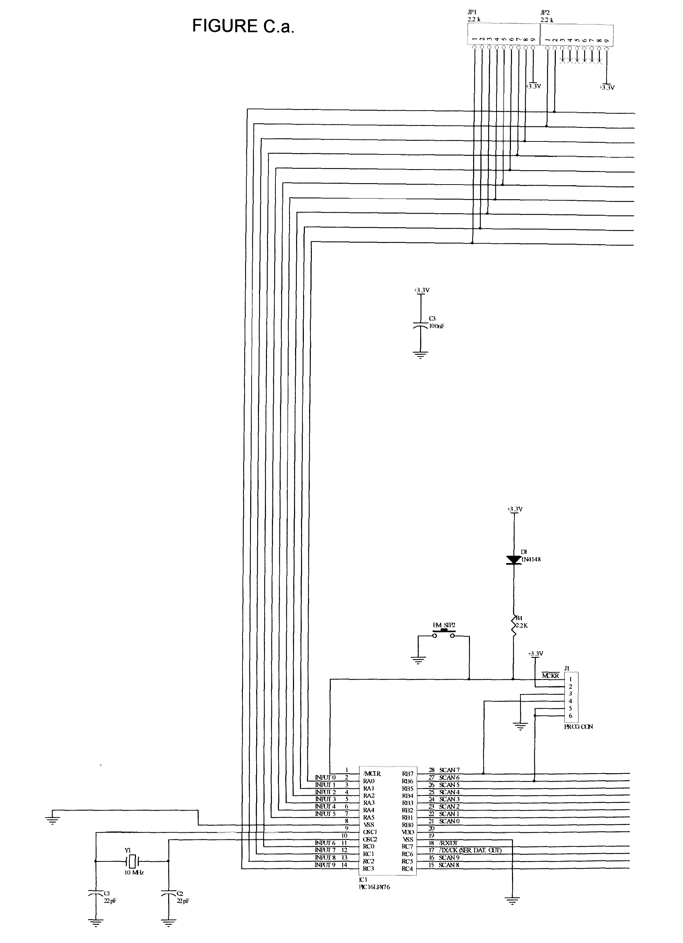

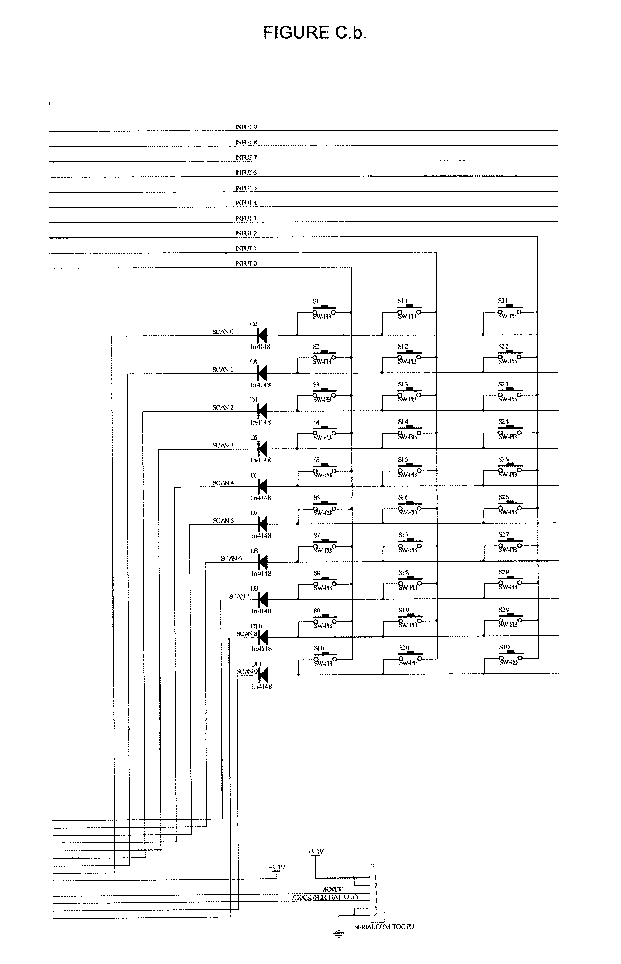

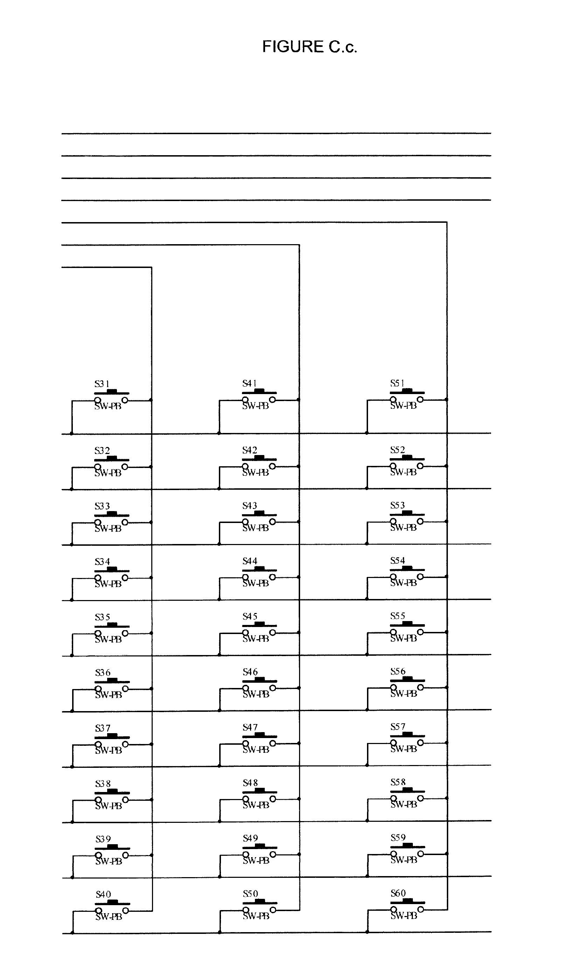

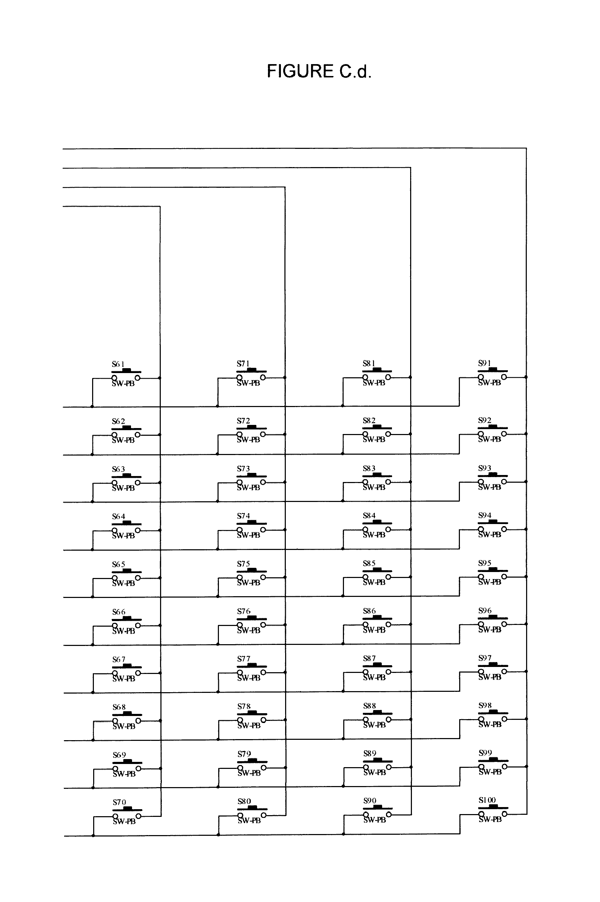

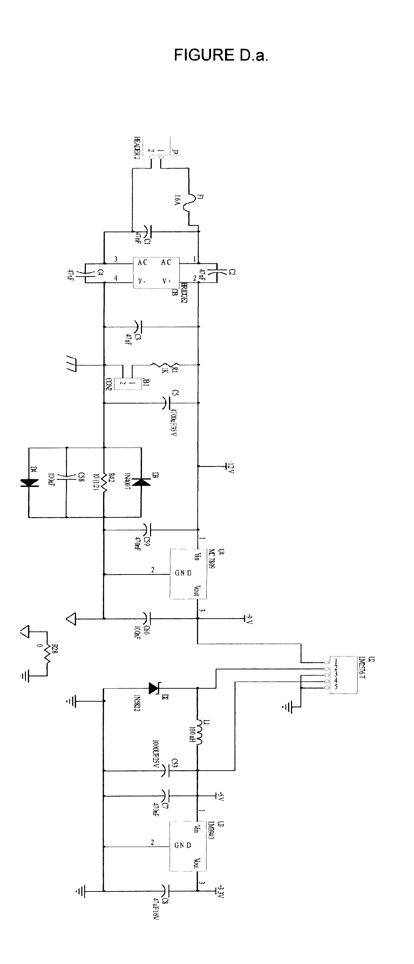

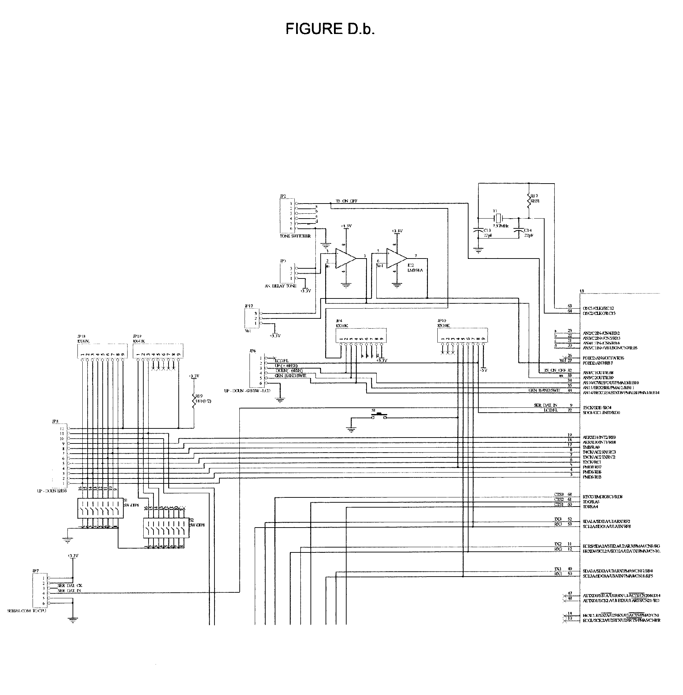

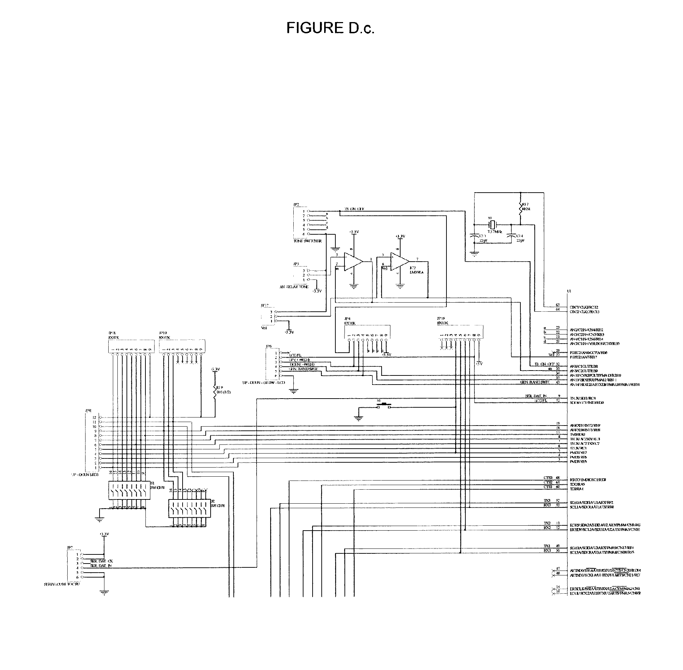

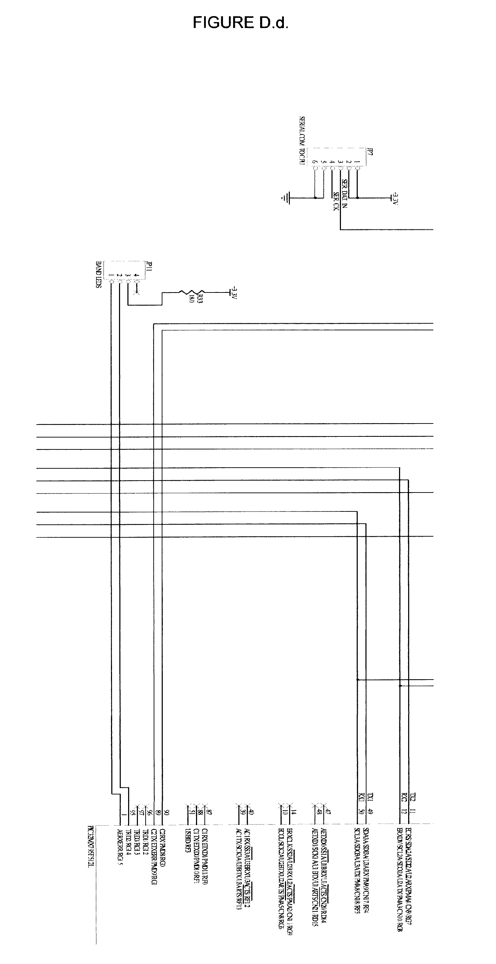

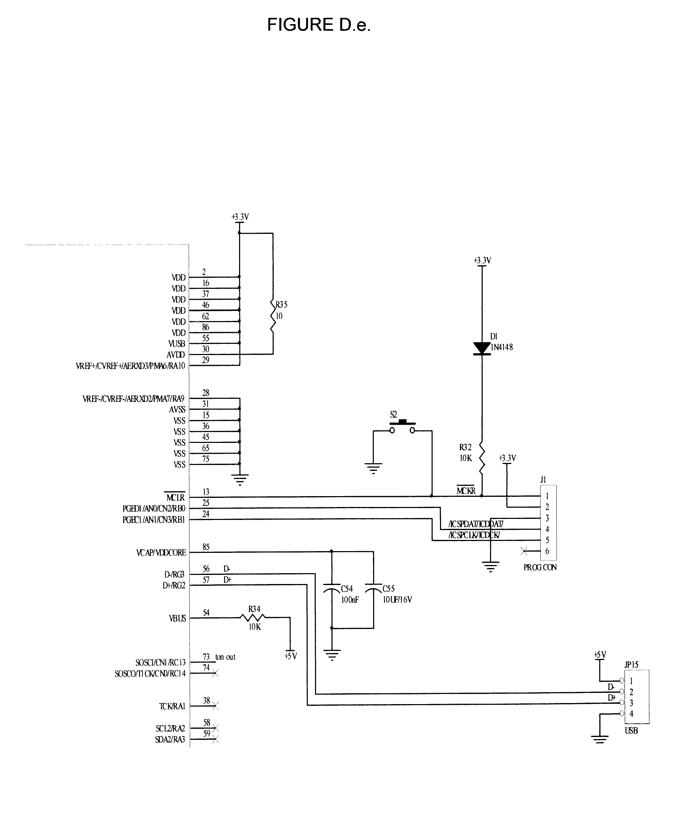

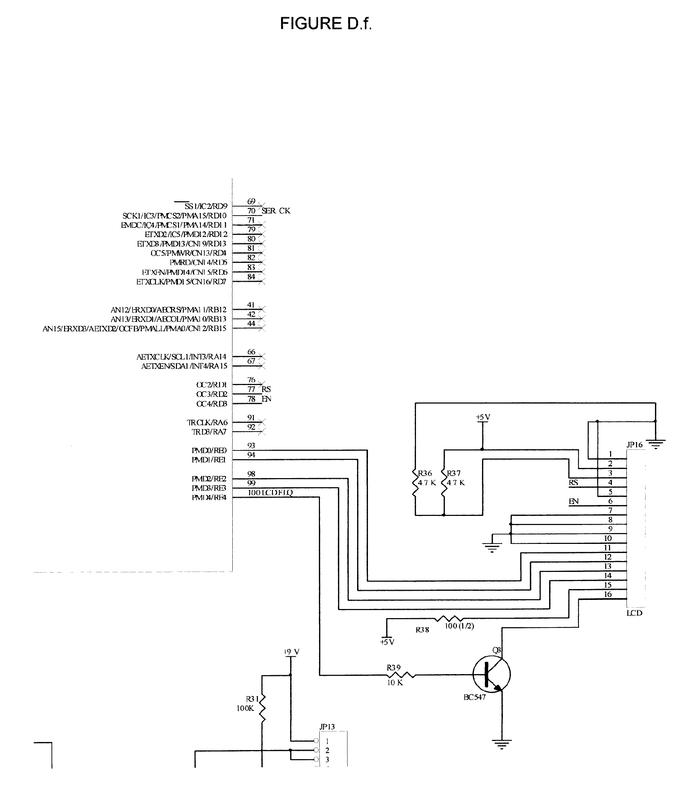

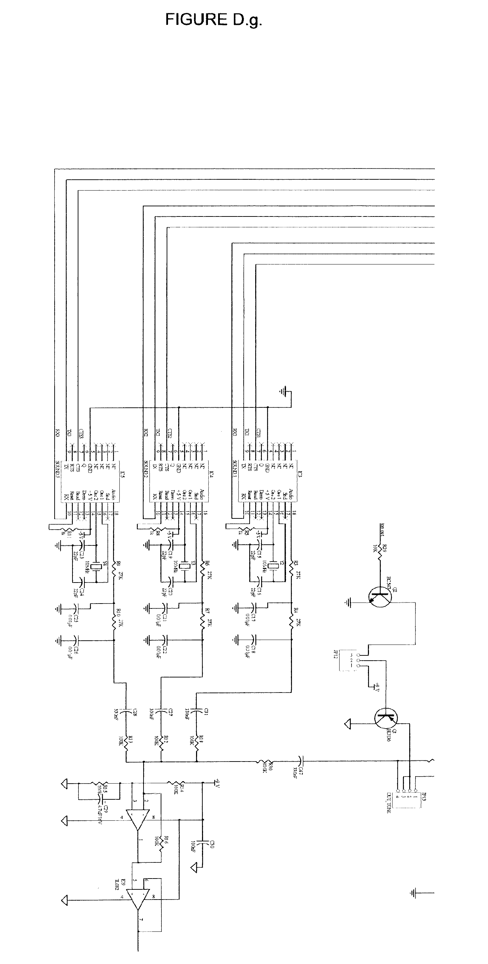

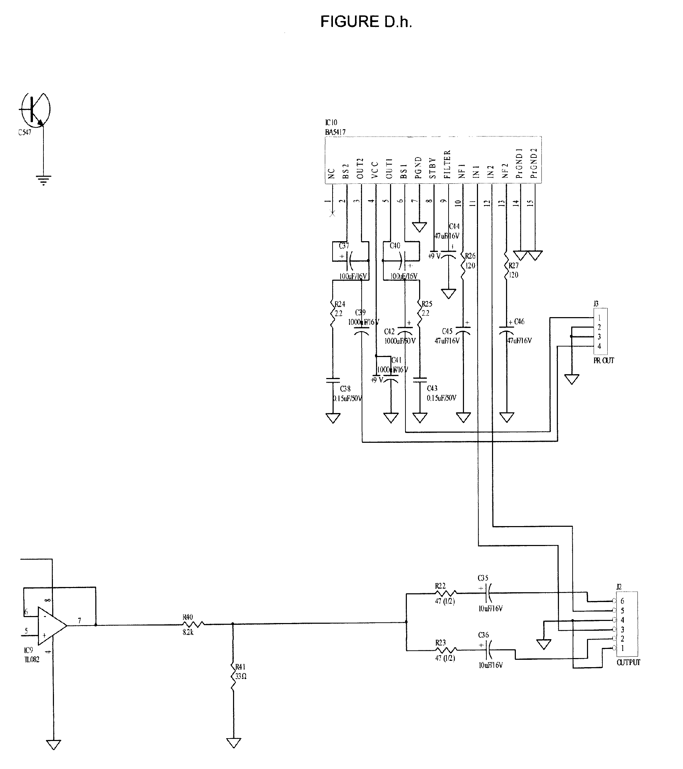

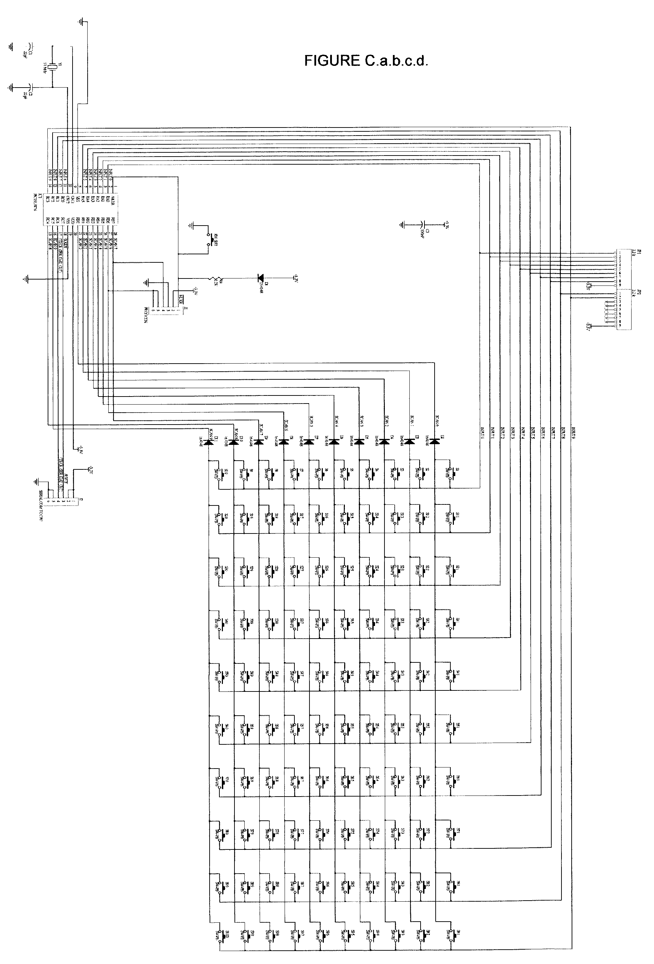

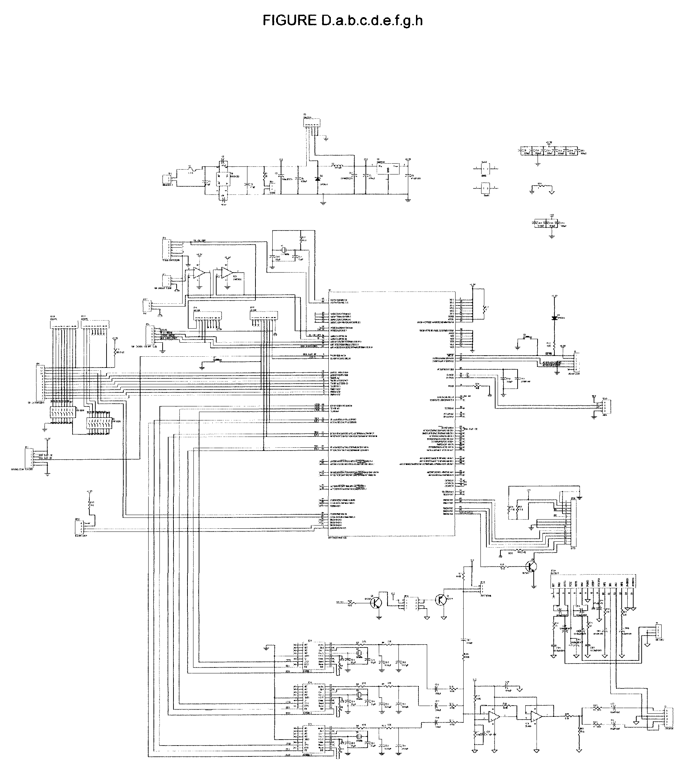

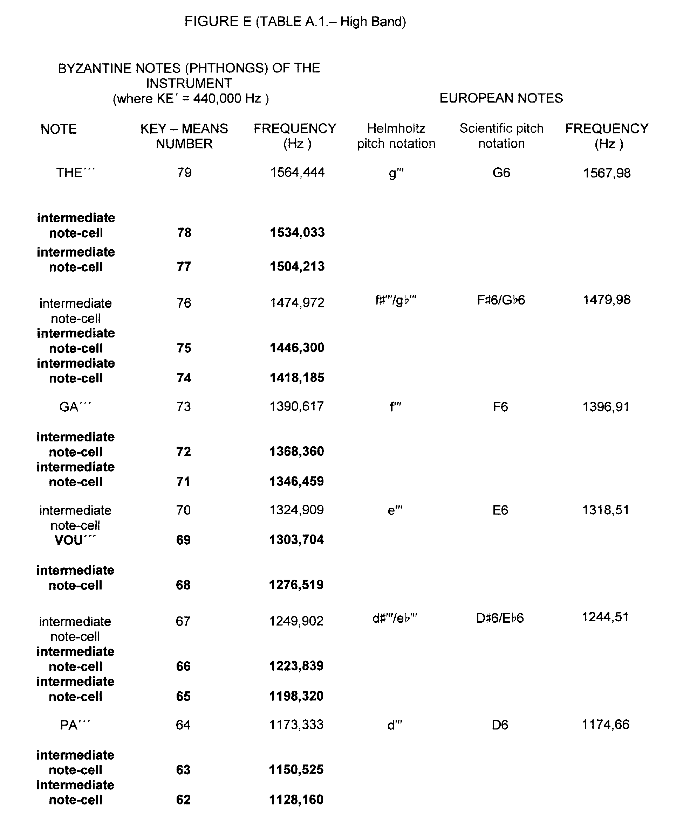

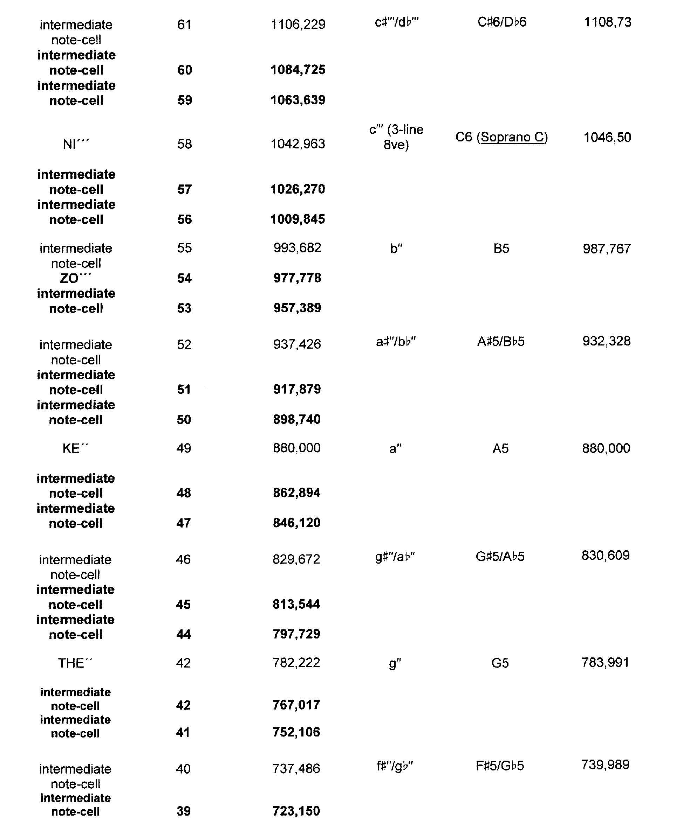

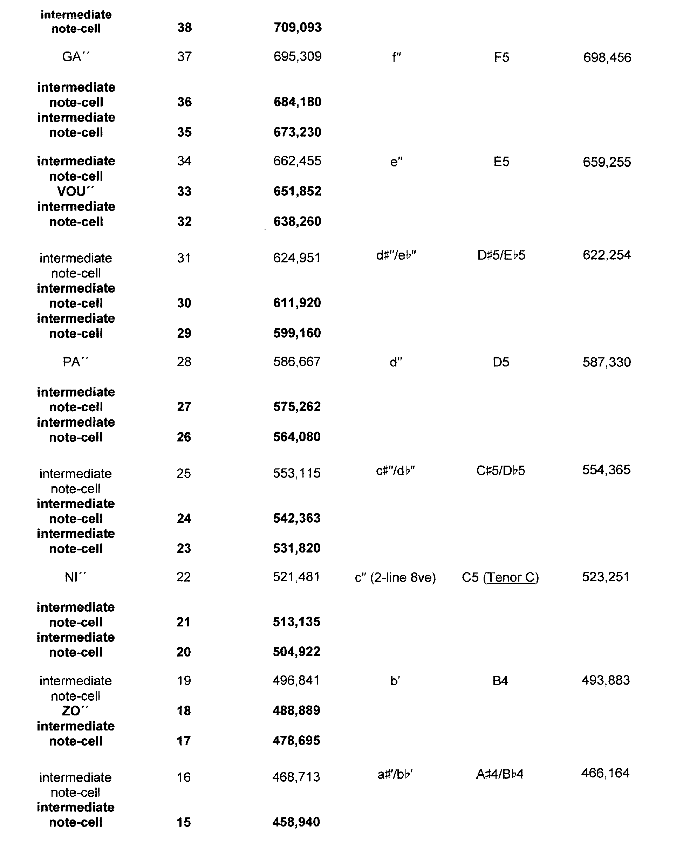

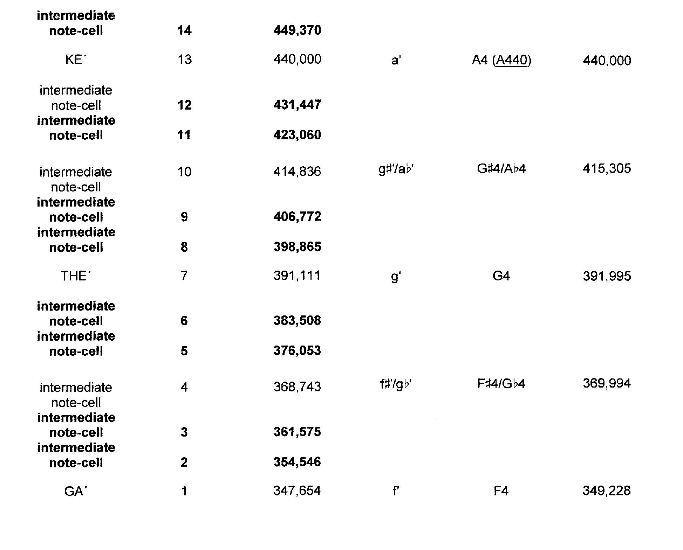

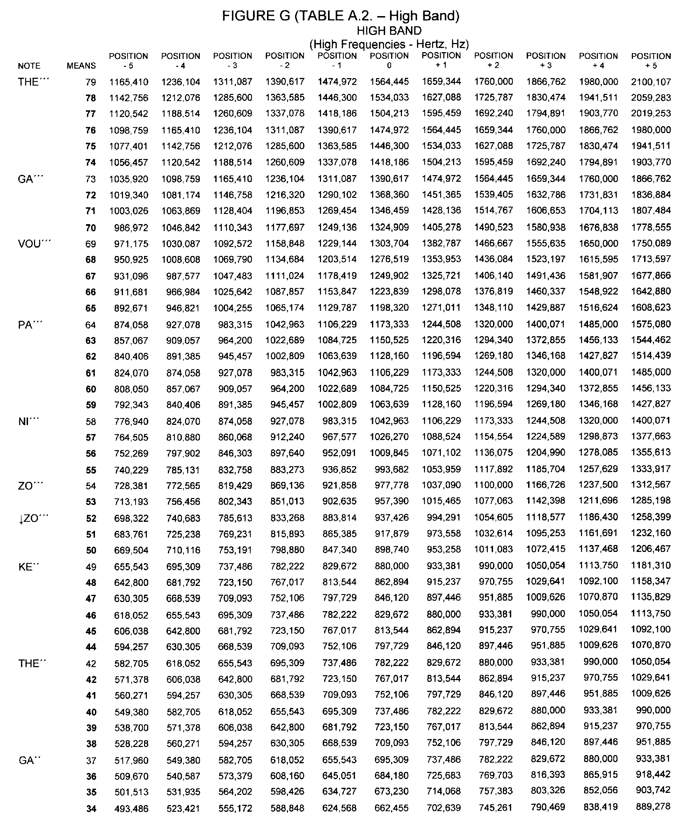

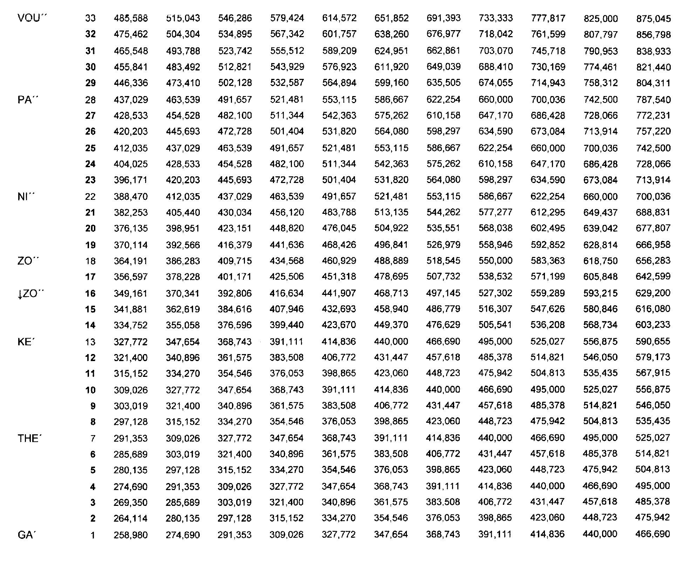

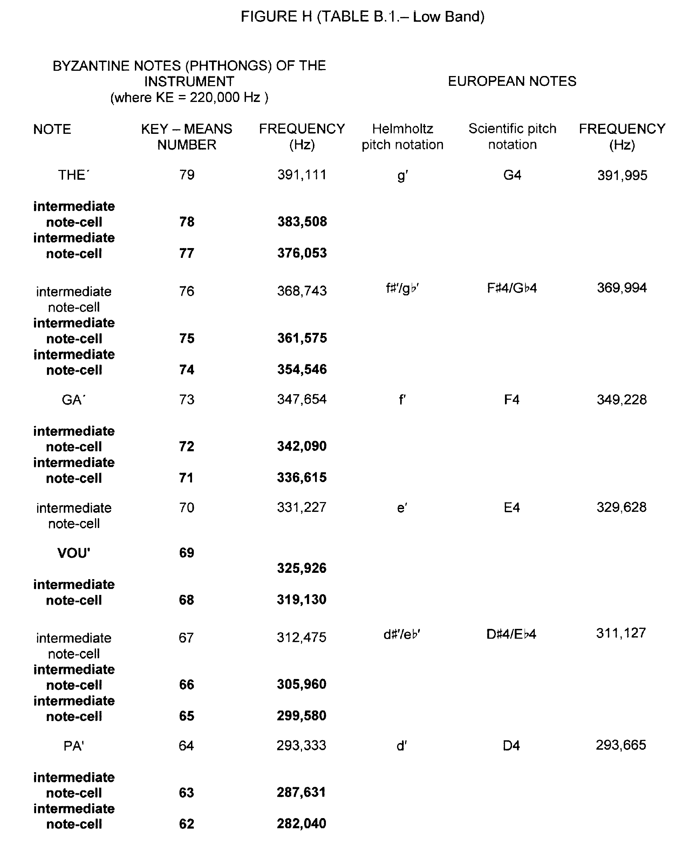

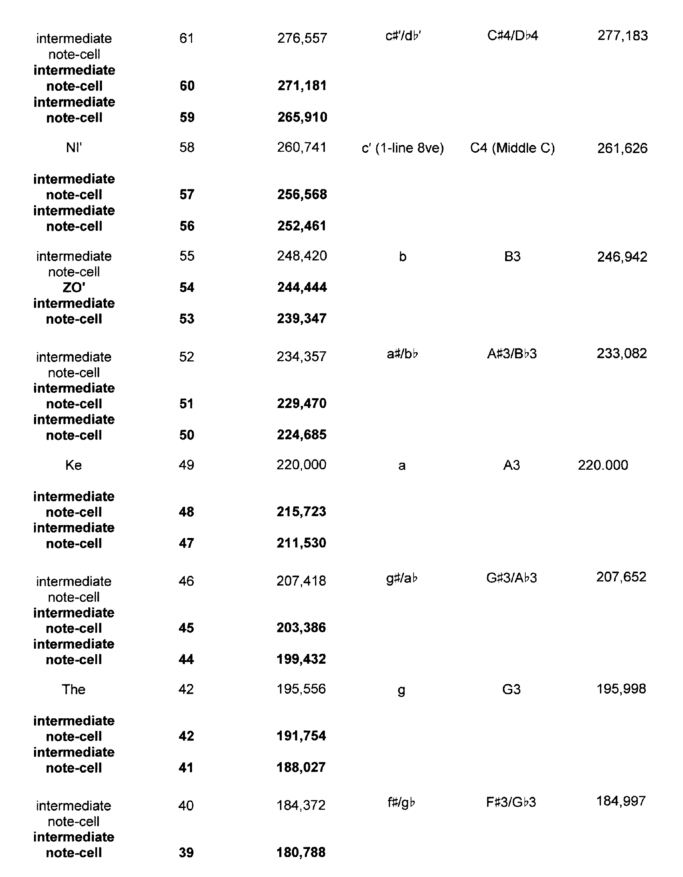

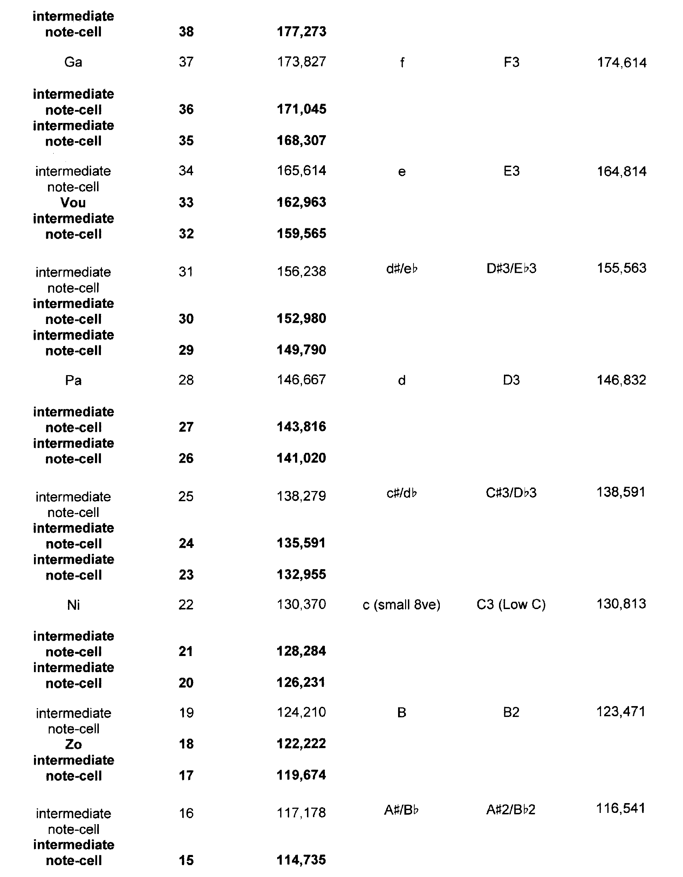

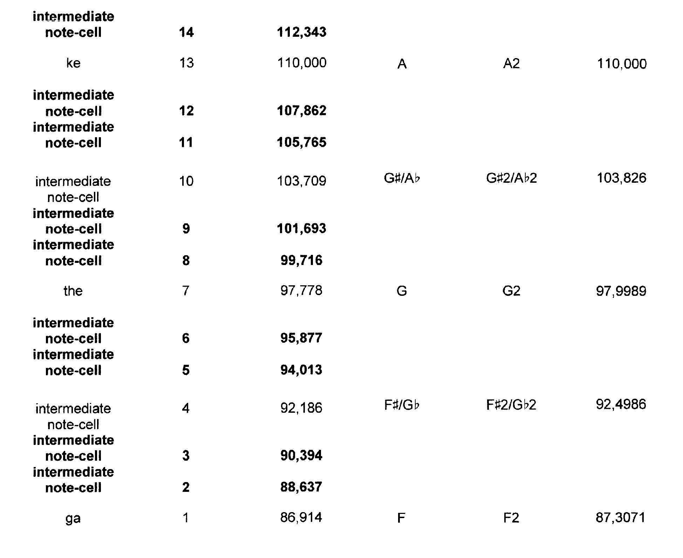

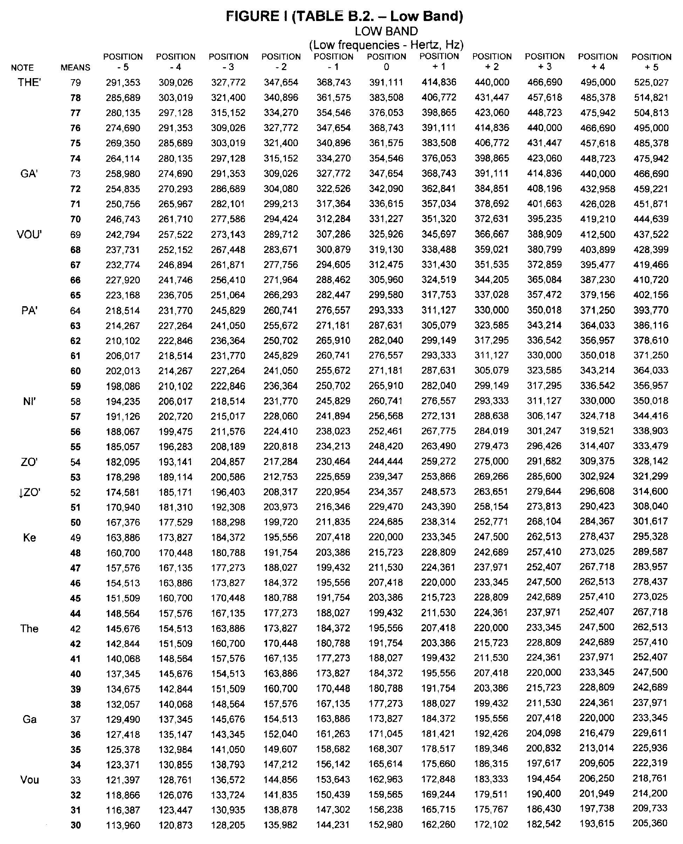

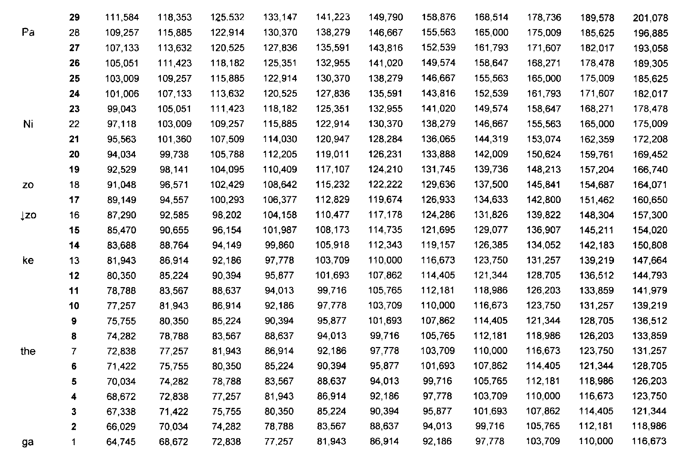

## Claims

1. Musical instrument in the shape of an electronic harmonium - synthesizer, for learning and performing Byzantine Music and European-Western Music [FIGURE "A" (Front elevation view of the instrument)] [FIGURE "B" (Back side view of the instrument)], which is **characterized by** the production of complex sounds - notes (phthongs) of all the scales of the Byzantine Music and the notes of the European-Western Music in real time and in correlation with each other [FIGURE E (Table A.1.- High Band)] [FIGURE G (TABLE A.2.- High band)] [FIGURE H (Table B.1.- Low band)] [FIGURE I (TABLE B.2.- Low band)] and it includes a keyboard or activation means (FIGURE "A"- indication 1) (FIGURE C.b) (FIGURE C.c) (FIGURE C.d) and keys or activation means (FIGURE "A"- indication 2) (FIGURE C.d), including the flat Zo, and all these (FIGURE "A"- indication 1) (FIGURE "A"-indication 2) with the ability to be extended in order to cover more than two octaves, as with its activation it is set to a position where the notes of the Scale of the Byzantine music coincide with the notes of the European-Western music [FIGURE E (Table A.1.- High Band)] [FIGURE H (Table B.1.-Low Band)], where the shift of the corresponding music scale of the keys-means (FIGURE "A"- indication 1) (FIGURE "A"- indication 2) (FIGURE C.b) (FIGURE C.c) (FIGURE C.d) is done simultaneously by one semitone of the twelve (12) intermediate note-cells towards higher or lower notes respectively [FIGURE G (TABLE A.2.- High Band) FIGURE I (TABLE B.2.- Low Band)], the activation of an activator - means (FIGURE "A"- indication 4) (Figure D.b, S1, S2) and the simultaneous activation of the corresponding visual indication (FIGURE "A"- indication 5) (Figure D.c, JP8, UP-DOUN LEDS), with the ability the number of these switches or activation means and these visual indications to be increased or reduced. The instrument also includes the "METRONOME" (FIGURE "A"- indication 8), with all the means and circuits that control the "MIXING" (FIGURE "A"- indication 8) (FIGURE D.g- JP12) of the metronome beats with the notes of the musical scales [FIGURE E (Table A.1.- High Band) ] [FIGURE G (TABLE A.2.- High Band)] [FIGURE H (Table B.1.- Low Band)] [FIGURE I (TABLE B.2.- Low Band)], the "VOLUME" (FIGURE "A"- indication 8) (FIGURE D.g- JP12, Q2, Q1) of the metronome beats, the "RHYTHM" (FIGURE "A"- indication 8) (FIGURE D.b- JP2, TONE SWITCHER, a, b, c, d, TS ON OFF) of the musical performance, the "TIME SIGNATURE" (FIGURE "A"- indication 8) (FIGURE D.b- JP3 AN. DELAY TONE).

2. Musical instrument in the shape of an electronic harmonium - synthesizer, for learning and performing Byzantine Music and European-Western Music, according to claim 1, **characterized in that** the placement of the keys or activation means (FIGURE "A"- indication 1) (FIGURE C.b) (FIGURE C.c) (FIGURE C.d) is such that the lower horizontal row covers at least two octaves of the Natural Diatonic Scale and two octaves of the Western European Scale where the intermediate note-cells of the scales are vertically above the lower horizontal row, where, depending on the activation of the means "BAND" and the corresponding indication "high" and "low" (FIGURE "A"- indication 3) (FIGURE D.b- JP6, GEN BAND SWIT.) (FIGURE D.d- JP11, BAND LEDS) the corresponding musical bands [FIGURE E (Table A.1.- High Band)] [FIGURE G (TABLE A.2.- High Band)] [FIGURE H (Table B.1.- Low Band)] [FIGURE I (TABLE B.2.- Low Band)] of the keyboard or activation means (FIGURE "A"- indication 1) (FIGURE "A"- indication 2) (FIGURE C.b) (FIGURE C.c) (FIGURE C.d) can be interchanged.

3. Musical instrument in the form of an electronic harmonium - synthesizer, for learning and performing Byzantine Music and European-Western Music in accordance with claim 1, **characterized in that** it includes an electronic display panel (FIGURE "A"- indication 15) (FIGURE D.f, JP16, LCD, Q3) and a port to connect to external digital units (FIGURE "B"- indication 16), (FIGURE D.e, JP15, USB). It also includes the volume control (FIGURE "A"- indication 6) (FIGURE D.v , JP17, Vol) to adjust the volume of the notes and the volume (FIGURE "A"- indication 7) (FIGURE D.b, JP18, Isok. Vol) to adjust the volume of the notes. The volume is controlled by the central control unit (FIGURE D.b) (FIGURE D.c) (FIGURE D.d) (FIGURE D.e) (FIGURE D.f) based on the existing software within the latter.

4. Musical instrument in the shape of an electronic harmonium - synthesizer, for learning and performing Byzantine Music and European- Western Music, according to claim 1, **characterized in that** the sound of the notes of the musical scale is complex in frequency, amplitude and sounds by the "envelope" form, according to the properties of the synthesizer (FIGURE D.g) based on the existing software. Furthermore, the information of the keyboard or activation means (FIGURE "A"- indication 1) (FIGURE "A"- indication 2) (FIGURE C.b) (FIGURE C.c) (FIGURE C.d) with the help of the central control unit (FIGURE C.a) and the existing software, is being controlled and transferred to the central control unit (FIGURE D.b) (FIGURE D.c) (FIGURE D.d) (FIGURE D.e) (FIGURE D.f) by means of the existing software, as well as the activators - means [(FIGURE "A"- indication 3) (FIGURE D.b- JP6, GEN BAND SWIT.)] [(FIGURE "A"- indication 4) (Figure D.b , S1, S2)], the visual indications [(FIGURE "A"- indication 3) (FIGURE D.d- JP11, BAND LEDS)] [(FIGURE "A"- indication 5) (Figure D.c, JP8, UP-DOUN LEDS)], the "METRONOME" (FIGURE "A"- indication 8) containing the "MIXING" (FIGURE "A"- indication 8) (FIGURE D.g- JP12), the "VOLUME" (FIGURE "A"- indication 8) (FIGURE D.g- JP12, Q2, Q1), the "RHYTHM" (FIGURE "A"-indication 8) (FIGURE D.b- JP2, TONE SWITCHER, a, b, c, d, TS ON OFF), the "TIME SIGNATURE" (FIGURE "A"- indication 8) (FIGURE D.B- JP3 AN. DELAY TONE), are adjusted and controlled by the central control unit (FIGURE D.b) (FIGURE D.c) (FIGURE D.d) (FIGURE D.e) (FIGURE D.f) by means of the existing software.
